# DEMANDE DE BREVET EUROPEEN

(11) **EP 1 106 680 A1**
(43) Date de publication de la demande: **13.06.2001**
(21) Numéro de dépôt: 00403375.9
(22) Date de dépôt: 01.12.2000
(51) Int. Cl.: C12G 1/12, C12H 1/08

(54) **Procédé et dispositif de stabilisation du vin**

(30) Priorité: 03.12.1999 FR 9915253
(71) Demandeur: Oeno Concept, 51530 Mardeuil (FR)
(72) Inventeur: Esteve, Jean-Louis, 51320 Chouilly (FR)
(74) Mandataire: Viard, Jean

(57) **Abrégé**

Procédé et dispositif de stabilisation du vin consistant à adjoindre à l'unité de réfrigération (D) une unité frigorifique auxiliaire (1) effectuant un prérefroidissement du vin avant précipitation des cristaux de bitartrate de potassium.

## Description

La présente invention a pour objet un procédé et un dispositif de stabilisation du vin par le froid, en continu, par le procédé connu sous le nom de CRYSTALLOPROCESS.

La stabilisation continue du vin par le froid consiste en l'élimination du bitartrate de potassium en excès dans le vin, avant mise en bouteille. En effet, le bitartrate naturellement en excès dans le vin peut précipiter sous l'effet de facteurs physiques externes tels que la température ou interne par modification des composants physico-chimiques. Ce qui se traduit par l'apparition de cristaux qui, bien que ne présentant aucun danger pour la santé, doivent être éliminés. Cette élimination est classiquement obtenue en faisant précipiter le bitartrate avant la mise en bouteilles.

Lors du procédé de stabilisation du vin par le froid, celui-ci subit les traitements suivants:
1° prérefroidissement à contre-courant avec le vin traité, le vin « entrant » étant refroidi par le vin « sortant » dans un échangeur à plaques par exemple de +15°C à 0°C.
2° Puis le vin est amené, généralement dans une cuve ou cristallisoir au voisinage de son point de congélation (par exemple de 0 à -3°C) et mis en présence de cristaux ajoutés de bitartrate de potassium exogène ou autres cristaux tel que du tartrate de calcium.
3° le mélange est soumis à une agitation intense dans la cuve dans laquelle le vin séjourne un temps défini par le volume de la cuve et le débit de fonctionnement pour que les contacts entre les cristaux endogènes et exogènes soient maximaux.
4° à la sortie de la cuve, un filtre sépare à froid les cristaux du vin traité. Le vin « sortant » est réchauffé après filtrage par le vin « entrant » comme indiqué précédemment.

Différents systèmes de stabilisation du vin sont connus et utilisés. L'échangeur à plaques permet de récupérer jusqu'à 90% des calories du système hors déperditions thermiques (tuyauterie, filtre etc.) Le reste, soit 10% correspondent au matériel frigorifique nécessaire au process. Les opérations de la phase 2 nécessitent une unité frigorifique qui est intégrée à la cuve ou indépendante.

Le refroidissement du vin au voisinage de son point de congélation est habituellement obtenu à l'aide d'un matériel à compression et détente directe de réfrigérant. La partie en contact direct avec le vin est l'évaporateur constitué par une paroi de la cuve et la partie évacuation des calories le condenseur. Le condenseur évacue les calories via son circuit d'échange entre le réfrigérant et l'air extérieur.

L'évaporateur réfrigérant le vin doit être largement dimensionné pour obtenir les performances requises, même avec un entartrage partiel. Le condenseur à air rendu nécessaire par l'augmentation du coût de l'eau doit être placé à l'extérieur de l'installation dans un endroit tempéré et, dans certaines installations, le positionnement du condenseur conduit à des coûts de montage élevés et à des performances limitées en raison notamment de la longueur des canalisations de sortie vers l'extérieur alors que la cuve se trouve habituellement dans une cave.

Un objet de l'invention est de pallier cet inconvénient en séparant le système de réfrigération en deux parties.

Selon l'invention le procédé de stabilisation du vin en continu, dans une installation comprenant une cuve, un échangeur à plaques, un filtre et une unité principale de réfrigération de la cuve est caractérisé en ce qu'il consiste à adjoindre à l'unité de réfrigération une unité frigorifique auxiliaire effectuant un prérefroidissement. Le dispositif auxiliaire décharge l'unité de réfrigération d'une grande partie de son travail et même de l'ensemble de ce travail lorsque le système est en fonctionnement, seule la descente en température de la cuve nécessitant le fonctionnement de l'unité frigorifique principale. La capacité de cette unité peut ainsi être réduite ce qui en abaisse le coût.

Selon une autre caractéristique de l'invention, le prérefroidissement est réalisé dans un échangeur à plaques supplémentaire monté en dérivation sur la sortie de vin de l'échangeur à plaques principal.

Les échangeurs supplémentaires sont placés dans le flux du vin entrant pour le refroidissement et dans le flux du vin sortant pour le réchauffement de part et d'autre de l'échangeur principal. Ces échangeurs supplémentaires sont des éléments d'un système frigorifique indépendant qui peut être soit direct, c'est-à-dire à détente directe de réfrigérant dans les échangeurs, soit indirect, c'est-à-dire avec échangeurs intermédiaires et circulation d'un liquide réfrigérant tel que de l'eau glycolée.

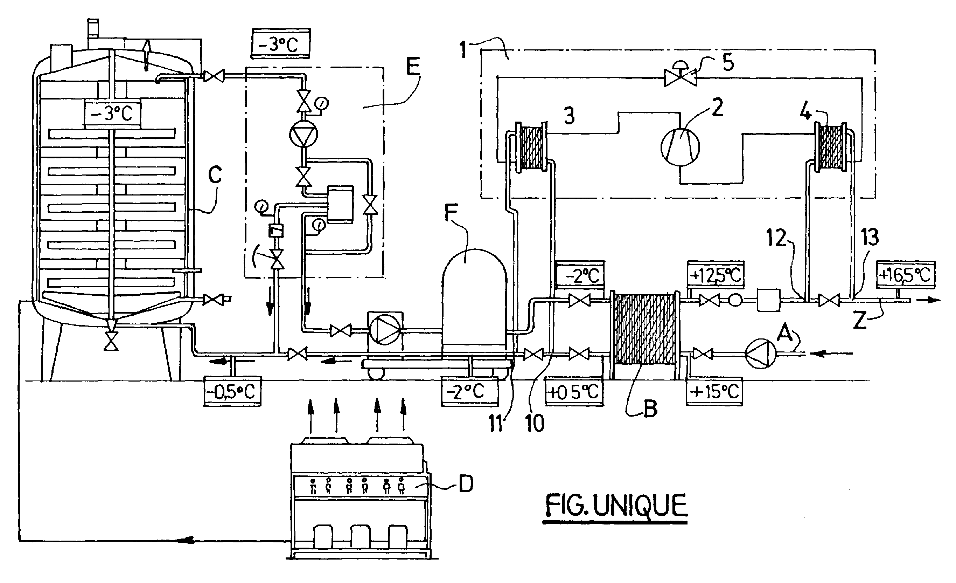

D'autres caractéristiques et avantages de l'invention apparaîtront au cours de la description qui va suivre d'un mode particulier de réalisation, donné uniquement à titre d'exemple non limitatif, en regard de la figure unique qui représente une installation selon l'invention :

Sur la figure unique, on distingue, de la droite vers la gauche de la figure une entrée du vin A commandée par une vanne (non référencée) qui correspond, par ladite vanne avec un échangeur à plaques B permettant de récupérer les calories du vin entrant pour réchauffer le vin sortant par la canalisation Z. La sortie de l'échangeur à plaques B est connectée, par l'intermédiaire de vannes à la partie inférieure d'une cuve C munie d'agitateurs pour obtenir un contact intime entre le vin introduit dans la cuve et des cristaux exogènes. La cuve est réfrigérée par un groupe de froid D ce qui permet d'abaisser la température interne à environ -3°C.

Le vin sort à la partie supérieure de la cuve C et est dans un premier temps introduit dans un dispositif séparateur de cristaux E suivi d'un filtre KIESELGUHR F, après quoi il est dirigé vers l'échangeur à plaques B dans lequel il est réchauffé à une température de + 12,5° C environ avant d'être prélevé sur la sortie Z. Le débit d'entrée du vin est égal au débit de sortie du vin.

Le dispositif qui vient d'être décrit est une installation classique de traitement du vin par le froid. Selon l'invention, on améliore très efficacement le fonctionnement de l'installation en montant en parallèle sur les canalisations d'entrée/sortie du vin un ensemble frigorifique 1 avec échangeurs à détente directe.

Le circuit 1 comprend un compresseur 2, un échangeur évaporateur 3 et un échangeur condenseur 4 reliés au compresseur 2 et entre eux par une canalisation de détente 5. L'échangeur évaporateur 3 est connecté en parallèle entre les points 10 et 11 de la canalisation d'amenée du vin et l'échangeur condenseur 4 est branché en parallèle sur le circuit de sortie du vin entre les points d'entrée 12 et de sortie 13.

Le condenseur fait passer le vin entrant d'une température de +0,5° C à une température de -2° C. L'évaporateur fait passer le vin en sortie d'une température de 12,5° C à une température de +16,5° C. (Températures données uniquement à titre d'exemple).

L'ensemble 1 effectue un prérefroidissement (pouvant être conditionné pour le refroidissement complet) qui décharge le système de refroidissement D d'une partie de son travail. L'échangeur évaporateur 3 refroidit le vin par détente directe du fluide réfrigérant (ou d'eau glycolée)circulant en circuit fermé. L'échangeur condenseur 4 est à détente directe de réfrigérant ou d'eau glycolée. C'est la condensation de ce fluide qui libère les calories récupérées par le vin en sortie d'installation.

Ce prérefroidissement ne nécessite pas d'installation onéreuse et utilise des échangeurs à plaques classiques largement dimensionnées. Le refroidissement classique est ainsi allégé par le travail de l'unité supplémentaire et beaucoup plus facile à mettre en oeuvre. Le vin « entrant » pré refroidi quasi instantanément dès la sortie de l'échangeur à plaques B est mieux préparé pour le travail de précipitation.

Bien que l'exemple donné ci-dessus concerne le crystalloprocess, la présente invention peut être mise en oeuvre dans tous les process en continu nécessitant un refroidissement

Il va de soi que de nombreuses variantes peuvent être apportées, notamment par substitution de moyens techniques équivalents, sans sortir pour cela du cadre de l'invention.

## Revendications

1. Procédé de stabilisation du vin en continu, dans une installation comprenant une cuve (C), un échangeur à plaques (B), un filtre (F) et une unité principale (D) de réfrigération de la cuve caractérisé en ce qu'il consiste à adjoindre à l'unité de réfrigération (D) une unité frigorifique auxiliaire (1) effectuant un prérefroidissement.

2. Procédé de stabilisation du vin selon la revendication 1, caractérisé en ce que le prérefroidissement est réalisé dans un échangeur évaporateur (3) monté en dérivation sur la sortie de vin de l'échangeur à plaques principal (B).

3. Dispositif de mise en oeuvre du procédé selon la revendication 2, caractérisé en ce que l'unité auxiliaire (1) comprend un compresseur (2) connecté entre l'échangeur évaporateur (3) et un échangeur condenseur (4), les échangeurs (3,4) étant réunis par une canalisation (5) de détente.
